# EUROPÄISCHE PATENTSCHRIFT

(11) **EP 1 530 939 B1**
(45) Veröffentlichungstag und Bekanntmachung des Hinweises auf die Patenterteilung: **22.08.2007**
(21) Anmeldenummer: 04024736.3
(22) Anmeldetag: 16.10.2004
(51) Int. Cl.: A47J 31/057, A47J 31/54

(54) **Gerät zur Zubereitung heisser Getränke, insbesondere Getränke, die mit löslichem Pulver hergestellt werden**
Apparatus for preparing hot beverages, in particular beverages made with soluble powder
Appareil pour la préparation de boissons chaudes, en particulier de boissons à base de poudres solubles

(30) Priorität: 15.11.2003 DE 10353452
(43) Veröffentlichungstag der Anmeldung: 18.05.2005
(73) Patentinhaber: Braun GmbH, 61476 Kronberg (DE)
(72) Erfinder: Borrego, Albert, 08902 L'Hospitalet de Llobregat (Barc.) (ES); Martinez, Candelario, 08820 El Prat del Llobregat (Barcelona) (ES); Font, Vicenc, 08013 Barcelona (ES); Vilalta, Montserrat, 08950 Esplugues de Llobregat (Barcelona) (ES); Coronado, Juan Carlos, 08042 Barcelona (ES); Rebordosa, Antonio, 08272 Sant Fruitos de Bages (Barcelona) (ES)
(74) Vertreter: Müller, Eckhard

(56) Entgegenhaltungen:
- EP-A- 0 777 991
- US-A- 4 944 217

## Beschreibung

Die Erfindung betrifft ein Gerät zur Zubereitung heißer Getränke gemäß dem Oberbegriff des Patentanspruchs 1.

Aus der US 2003/0145736 A1 ist bereits ein Gerät zum Zubereiten heißer Getränke bekannt. Dabei wird von einer Pumpe Wasser aus einem Wasserreservoir gepumpt und in einen mit einer Heizeinrichtung versehenen Boiler gefördert, der hier eine Volumenaufnahme von 7 bis ungefähr 19 Liter haben soll. Erhitztes Wasser wird von einer Pumpe aus dem Boiler einer Brüheinrichtung zugeführt, in der ein Brühgetränk entsteht, das in ein unterhalb der Brüheinrichtung ausgebildetes Gefäß abfließt. Dieses Gerät zur Zubereitung heißer Getränke hat den Nachteil, daß, wenn man beispielsweise nur eine Tasse eines heißen Getränkes herstellen will, man eine große Menge von Wasser im Boiler erhitzen muß. Dies ist äußerst energieaufwendig und daher sehr kostspielig.

Aus der DE 34 47 237 A1 ist weiterhin ein Gerät zur Zubereitung heißer Getränke der eingangs angegebenen Art bekannt, bei dem der Wassertank mit einem unterhalb des Wassertanks ausgebildeten Durchlauferhitzer verbunden ist, dessen Ausgang zu einem Steigrohr führt, das an seiner obersten Stelle einen ersten Überlauf aufweist. Über den ersten Überlauf fließt im Brühbetrieb kochendes Wasser in eine mit vorzugsweise Kaffeemehl befüllbare Brühvorrichtung ein. Nach Extraktion des Kaffeemehls wird das Brühgetränke in eine darunter befindliche Aufnahmevorrichtung abgegeben. Bei dieser Anordnung muß der erste Überlauf jeweils über der maximalen Füllhöhe des Wasserbehälters angeordnet sein, damit im nicht eingeschalteten Zustand des Gerätes bei maximal gefülltem Wasserbehälter nicht Wasser selbsttätig über den ersten Überlauf abfließen kann. Wasser soll erst dann fließen, wenn die Heizeinrichtung des Durchlauferhitzers eingeschaltet wird, wobei dann durch die eintretende Dampfblasenbildung im Durchlauferhitzer Wasser über das Steigrohr soweit nach oben gefördert wird, daß es am ersten Überlauf überläuft und schließlich in die Brühvorrichtung einfließt. Dieser Durchlauferhitzer arbeitet im Betrieb als thermische Wasserpumpe.

Bei diesem Gerät ist es als weniger vorteilhaft anzusehen, daß, wenn der Wassertank gefüllt ist, eine verhältnismäßig hohe Wassersäule im Steigrohr vorhanden ist, die beim Aufheizen des Durchlauferhitzers nicht erhitzt wird und daher bei der beim Kochvorgang gebildeten Blasenbildung von diesen in die Brüheinrichtung kalt eingepumpt wird. Die Folge ist, daß, wenn man nur eine Tasse eines Brühgetränks wünscht, dieses in der Regel noch verhältnismäßig kalt ist und somit auch nicht lösliches Pulver oder gar Kaffeemehl oder Teeblätter ausreichend gut extrahiert werden und dabei noch ein viel zu kaltes Getränk entsteht.

Ein weiteres Gerät ist aus US 4944217 A bekannt.

Aufgabe der Erfindung ist es daher, ein Gerät zur Zubereitung heißer Getränke zu schaffen, bei dem auch der erste Schluck Wasser bereits kochend heiß ist. Weiterhin soll mit diesem Gerät nur eine äußerst geringe Wassermenge heißgehalten werden können, ohne daß dabei die Energiekosten nennenswert sind. Des weiteren sollen mit diesem Gerät auch in einem Arbeitsgang mehrere Tassen eines heißen Getränkes zubereitet werden können, ohne daß dabei die Temperatur des Wassers nennenswert vom Kochpunkt abfällt. Des weiteren soll die Geräteanordnung einfach, übersichtlich, leicht reinigbar und insbesondere auch kostengünstig für den häuslichen Bedarf sein.

Diese Aufgabe wird durch die kennzeichnenden Merkmale des Patentanspruchs 1 gelöst. Durch die erfindungsgemäße Ausbildung eines Zwischenbehälters, in dem der Wasserfüllstand von der Pumpe stets auf einem bestimmten Wasserspiegelniveau gehalten wird, das allerdings unter dem Wasserspiegelniveau des ersten Überlaufs sein muß, wird es möglich, einen äußerst einfachen und billig herzustellenden Durchlauferhitzer in einer Getränkezubereitungsmaschine für den häuslichen Bedarf einzusetzen, der mit einem kleinen Rohrquerschnitt auskommt. Das Wasser- oder Steigrohr des Durchlauferhitzers ist an seinem äußeren Umfang mit einem gewendelten Heizstab über einen längeren Bereich möglichst gut thermisch verbunden, was beispielsweise durch Auf- oder Einlöten des Heizstabes oder durch Eingießen eines Heizstabes in das Steigrohr selbst möglich ist.

Das Steigrohr selbst weist dabei nur einen verhältnismäßig geringen Innendurchmesser auf, beispielsweise 3 bis 40 mm, so daß die darin aufzubewahrende Wassermenge verhältnismäßig gering ist und demnach auch nur wenig Wärmeenergie zum Aufheizen und zum Warmhalten erforderlich macht. Im Bereitschaftszustand des Gerätes wird die Wassertemperatur im Durchlauferhitzer im wesentlichen konstant in Nähe des Siedepunktes gehalten.

Wird nun zum Zubereiten eines heißen Getränks heißes Wasser gewünscht, so wird von der Steuereinrichtung die Heizeinrichtung über die Thermostateinrichtung derart gesteuert, daß diese eingeschaltet wird und Wasser im Steigrohr zu kochen beginnt. Im Kochvorgang werden infolge der eintretenden Blasenbildung Wasserteile im Steigrohr über die Höhe des ersten Überlaufs gefördert, von wo sie dann am Auslaß austreten können. Solange die Steuereinrichtung die Heizung eingeschaltet läßt, solange wird Wasser aus dem Durchlauferhitzer in den Überlauf gefördert, vorausgesetzt die Steuermittel halten die Pumpe zum Nachfüllen des Zwischenbehälters eingeschaltet, damit die Füllstandshöhe bis zum zweiten Überlauf konstant gehalten wird. Der Vorteil dieses Gerätes liegt auch erfindungsgemäß darin, daß bei der Herstellung von mit löslichem Pulver hergestellten Getränken in sehr kurzer Zeit heißes Wasser und somit auch das Getränk zur Verfügung steht. Lange Aufheizzeiten sind nicht nötig, da der hier eingesetzte Rohrheizkörper als Durchlauferhitzer in Sekundenschnelle heißes Wasser liefert.

Vorzugsweise kann auch mit dem Gerät ausschließlich nur Dampf erzeugt werden, wenn der Füllstand im Zwischenbehälter durch die Mittel (Sensor und Steuereinheit) auf einem unterhalb des zweiten Überlaufs befindlichen Wasserspiegelniveau gehalten wird, so daß beim Kochvorgang im Durchlauferhitzer kein Wasser über den zweiten Überlauf austreten kann, sondern nur Dampf erzeugt wird, der dann ebenfalls am Auslaß oder an einem anderen Auslaß des ersten Überlaufs entnommen werden kann.

Der Durchlauferhitzer bestimmt also den Durchfluß von zum Kochen gebrachtes Wasser, da Wasser nur aus dem Zwischenbehälter nachfließen kann, wenn der Füllstand im Durchlauferhitzer unter die Höhe des zweiten Überlaufs im Zwischenbehälter abgesunken ist. Wassertank, Zwischenbehälter und Durchlauferhitzer sind im wesentlichen senkrecht zueinander angeordnet, wobei der maximale Flüssigkeitsstand im Zwischenbehälter immer unter dem Flüssigkeitsstand (Wasserspiegelniveau) des zweiten Überlaufs des Durchlauferhitzers liegen muß. Nur so wird gewährleistet, daß im Kochbetrieb nur kochendes Wasser den ersten Überlauf verlassen kann und nicht auch im Zustand der Warmhaltephase. Die Pumpenleistung der Pumpe sollte immer gleich oder größer der Pumpenleistung des Durchlauferhitzers sein, damit der Durchlauferhitzer im Heißwasserförderbetrieb nicht heiß- bzw. trockenlaufen kann.

Gemäß den Merkmalen des Patentanspruchs 2 bestehen die Mittel aus einem den Füllstand im Zwischenbehälter überwachenden Sensor und einer elektronischen Steuereinheit. Als Sensor kann ein den Flüssigkeitsspiegel überwachender Niveausensor (Licht- oder Infrarotsensor), ein Drucksensor, der beispielsweise am Boden des Zwischenbehälters eingesetzt ist, eine den Zwischenbehälter wiegende Wägeeinrichtung, eine kapazitive Meßeinrichtung oder sonstige den Füllzustand des Zwischenbehälters messende Einrichtung eingesetzt werden. Derartige Sensoren führen ihre elektrischen Signale der Steuereinheit zu, die dann die Pumpe einschaltet, wenn das Niveau unter den Sollwert sinkt.

Nach den Merkmalen des Patentanspruchs 3 ist am Einlaß des Zwischenbehälters ein in Richtung zum Wassertank schließendes Rückschlagventil ausgebildet. Dies hat den Vorteil, daß, wenn die Pumpe nach Erreichen des ordnungsgemäßen Flüssigkeitsniveaus im Zwischenbehälter abschaltet, nicht das Wasser zum Wassertank zurückfließen kann, sondern im Zwischenbehälter aufbewahrt bleibt. Es ist aber auch denkbar, ohne ein Rückschlagventil auszukommen, allerdings muß dann die Pumpe ständig ein- und ausgeschaltet werden, um das Flüssigkeitsniveau in bestimmten Grenzen auf Niveau zu halten.

Will man mit dem Gerät nach der Erfindung dosiert eine vorgegebene Tassenzahl an heißem Wasser entnehmen können, ohne daß dabei eine Bedienungsperson diese Dosierung selbst kontrollieren muß, so sind erfindungsgemäß die Merkmale des Patentanspruchs 4 von Vorteil. Wählt man danach eine Dosierpumpe, beispielsweise eine Flügelzellenpumpe, eine Flügelradpumpe, eine Membranpumpe oder eine Kolbenpumpe und kennt ihr Fördervolumen pro Zeiteinheit, so kann die Steuereinheit in Abhängigkeit der Tassenzahl die Pumpe zeitabhängig steuern. Die elektrische Steuereinheit ist also mit einem Zeitgeber versehen, der entsprechend der gewünschten Tassenzahl die Einschaltdauer der Pumpe steuert. Auf diese Weise kann mit dem Gerät bei stets heißem Wasser nur eine Tasse oder mehrere Tassen von heißem Wasser zubereitet werden, das anschließend einer Brüheinrichtung zugeführt wird. Dort kann beispielsweise ein Getränk aus Pulver (Kaffee-, Tee-, Milch oder Bouillonpulver) hergestellt werden, wenn hierzu die entsprechende Menge von löslichem Pulver in eine Kammer hinzugegeben wurde. Es ist aber auch durchaus denkbar, nur heißes Wasser dem Gerät zu entnehmen, wobei hier vorzugsweise ein Dauerschalter am Gerät betätigt wird, der so lange beide Pumpen in Betrieb hält, bis die von einer Bedienungsperson gewünschte Menge kochenden Wassers vom Gerät abgegeben wurde.

Durch die Merkmale des Patentanspruchs 5 wird auf einfache Weise durch die elektrische Steuereinheit und den Temperatursensor sowohl der Warmhaltebetrieb wie der Kochbetrieb zum Abgeben von kochendem Wasser über den ersten Überlauf geregelt.

Es könnte auch durchaus erfindungsgemäß gewünscht werden, daß man am ersten Überlauf auch kaltes Wasser, beispielsweise zur Erstellung eines Brausegetränkes, entnehmen will. Hierzu müßte die Steuereinrichtung mit einem Kaltwasserschalter verbunden sein, der in der elektrischen Steuereinheit bewirkt, daß diese ohne Abfrage des Thermostaten am Durchlauferhitzer und ohne Einschalten des Durchlauferhitzers direkt die Pumpe einschaltet. Dabei müßte dann das Wasser im Zwischenbehälter so hoch ansteigen, daß es die Höhe des ersten Überlaufs und natürlich auch die Höhe des zweiten Überlaufs übersteigt und somit ohne die Pumpwirkung des Durchlauferhitzers kaltes Wasser über den Überlauf in ein Gefäß abgegeben wird.

In dem Betriebszustand des Gerätes, in dem kochendes Wasser vom Durchlauferhitzer gefördert werden soll, muß der Durchlauferhitzer mit einem Temperaturfühler ausgestattet sein, der einerseits die Warmhaltetemperatur steuert und das Temperaturniveau konstant hält und der andererseits bei Fördern von kochendem Wasser auf eine über der Warmhaltetemperatur liegende Temperatur hochgesetzt wird und dabei die Heizeinrichtung so lange das Wasser im Steigrohr aufheizt bis dieses beginnt zu kochen und aus dem ersten Überlauf ins Freie fördert. Diese zweite Temperaturüberwachung liegt weit über 100 °C und dient dazu, daß der Durchlauferhitzer erst dann abgeschaltet wird, wenn diese Temperatur erreicht wird. Diese Temperatur wird in der Regel dann erreicht, wenn ein Trockenlaufen des Durchlauferhitzers erfolgt oder dieser stark verkalkt ist. Im Regelfall, also dann, wenn das Steigrohr ordnungsgemäß mit Wasser gefüllt ist, wird diese Temperatur nicht überschritten, d.h., der Durchlauferhitzer kocht so lange Wasser auf, solange Wasser über die Pumpe in den Zwischenbehälter gefördert und in den Durchlauferhitzer einfließt, wenn dieser aufgrund von heißem abgegebenem Wasser seinen Füllstand zu senken beginnt. Des weiteren sind an der Heizeinrichtung des Durchlauferhitzers noch ein oder zwei Schmelzsicherungen in der Drahtverbindung ausgebildet, damit, falls dieser eine unzulässige Temperatur von über 180 bis 200 °C erreicht, abgeschaltet wird, um eine Brandgefahr allgemein zu vermeiden. Tritt dieser Fall ein, so ist der Durchlauferhitzer defekt und kann nicht mehr aufgeheizt werden.

Durch die Merkmale des Patentanspruchs 7 wird ein Verfahren beschrieben, bei dem auf besonders einfache Weise geringe Mengen an Wasser im Durchlauferhitzer warmgehalten, jedoch bei Bedarf größere Mengen bis zum Kochpunkt erhitzt werden können, die dann über den ersten Überlauf austreten und die zur Aufbereitung eines Brühgetränkes mit löslichem Pulver oder mit Kaffeemehl oder Teeblättern oder sonstigen Geschmacksstoffen in Verbindung gebracht werden können.

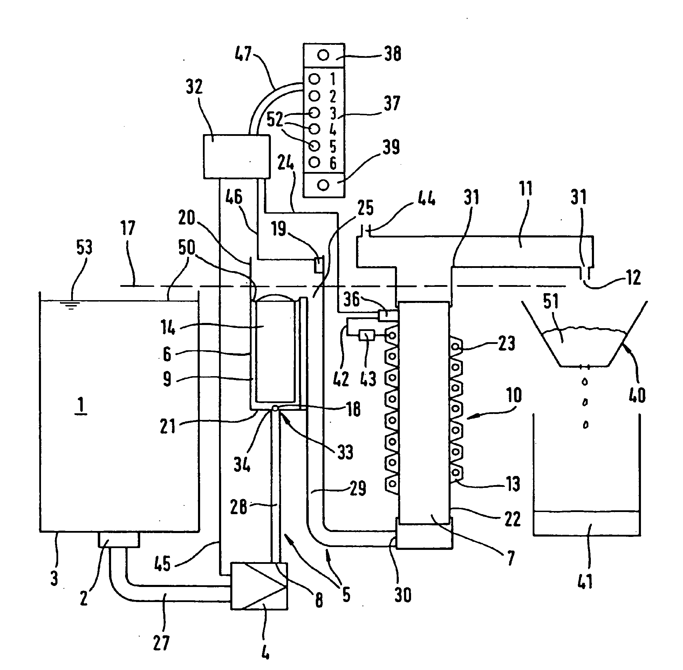

Ein Ausführungsbeispiel der Erfindung ist in einer einzigen Figur dargestellt und wird im folgenden näher erläutert.

Das Gerät zur Zubereitung heißer Getränke nach der Erfindung besteht gemäß der einzigen Figur aus einem mit Wasser 50 befüllbaren Wasserbehälter 1, an dessen Boden 3 ein Behälterauslaß 2 ausgebildet ist, der über einen Leitungsabschnitt 27 zu einer elektrisch angetriebenen Pumpe 4 führt. In der Pumpe 4 ist ein elektrischer Antriebsmotor ausgebildet (nicht dargestellt), der mechanisch mit der Pumpe 4 verbunden ist. Die Pumpe 4 kann beispielsweise eine Flügelzellenpumpe, eine Kolbenpumpe, eine Membranpumpe oder sonst eine für Wasser geeignete Pumpe sein, die aber hier nicht weiter erläutert wird, da diese aus dem Stand der Technik ganz allgemein bekannt sind.

Der Ausgang 8 der Pumpe 4 ist über den Leitungsabschnitt 28 mit einem Zwischenbehälter 6 verbunden, wobei am Einlaß 34 der Leitung 28 zum Zwischenbehälter 6 am Boden 21 ein in Richtung zur Pumpe 4 hin schließendes Rückschlagventil 33 ausgebildet ist, von dem hier nur das Ventilglied 18 in Form einer Kugel schematisch dargestellt ist. An dieser Stelle wird auf das Rückschlagventil 33 nicht näher eingegangen, da derartige Rückschlagventile bei Kaffeemaschinen allgemein zum Stand der Technik zählen. Wichtig ist nur, daß das Rückschlagventil 33 gegen die Kraft einer an der Kugel angreifenden Feder oder gegen das Eigengewicht der Kugel 18 zum Behälterraum 9 des Zwischenbehälters 6 hin öffnet, wenn die Pumpe 4 Wasser in den Zwischenbehälter 6 drückt. In der Kammer 9 des Zwischenbehälters 6 ist vorzugsweise ein Wasserfilter 14 ausgebildet, der das von der Leitung 28 kommende Wasser reinigt, wenn es den Zwischenbehälter 6 nach oben durchströmt.

An der oberen Wand 20 des Zwischenbehälters 6 oberhalb der maximalen Füllstandshöhe 17 ist ein Sensor 19 befestigt, der den Wasserfüllstand 17 im Zwischenbehälter 6 kontrolliert. An der rechten Wand 20 des Zwischenbehälters 6 ist ein Rohrabschnitt 29 entlanggeführt, der den Boden 21 des Zwischenbehälters 6 nach unten durchdringt und zunächst in der Figur weiter nach unten verläuft, bis er dann um 90° in der Zeichnung nach rechts abknickt und in den Einlaß 30 eines Durchlauferhitzers 10 einmündet. Der Leitungsabschnitt 29 endet im Zwischenbehälter 6 an einem zweiten Überlauf 25, der etwas unterhalb der in der Figur dargestellten Wasserfüllstandshöhe 17 verläuft, worauf aber später noch eingegangen wird. Der Leitungsabschnitt 29 kann auch mittig oder außerhalb des Zwischenbehälters 6 verlaufen. Sein Überlauf 25 muß nur zu hoch stehendes Wasser im Zwischenbehälter 6 aufnehmen können.

Die Wand 20 des Zwischenbehälters 6 ragt über die Wasserfüllstandshöhe 17 nach oben hinaus. Der Durchlauferhitzer 10 besteht aus einem Steigrohr 7 geringen Durchmessers, das thermisch in direktem Kontakt mit einem an der Außenfläche 22 ausgebildeten Heizwiderstand 13 steht. Der Heizwiderstand 13 ist beispielsweise auf die Außenfläche 22 aufgelötet oder bei der Ausformung des Steigrohrs 7 wird der Heizwiderstand 13 gleich mit in das vorzugsweise gut wärmeleitende Aluminium- oder Kupfermaterial eingegossen. Der Heizwiderstand 13 besteht üblicherweise aus einem in Sand (nicht dargestellt) eingebetteten Heizwendel 23, der hier nur andeutungsweise dargestellt ist. Das Steigrohr 7 verläuft ebenfalls wie der Zwischenbehälter 6 in der Zeichnung nach oben.

Der Ausgang des Steigrohres 7 wird von einem ersten Überlauf 31 gebildet, der oberhalb der Wasserfüllstandshöhe 17 angeordnet ist. Im oberen Bereich ist an dem Durchlauferhitzer 10 eine Thermostat- oder Temperaturmeßeinrichtung 36 ausgebildet, die einerseits über eine elektrische Leitung 24 mit einer elektrischen Steuereinheit 32 und andererseits mit dem Heizwendel 23 verbunden ist. In der Stromleitung 42, die von der Thermostateinrichtung 36 zum Heizwendel 23 führt, ist noch eine Schmelzsicherung 43 eingesetzt, die bei Überschreiten der zulässigen Temperatur des Heizwiderstandes 13, d.h., wenn dieser defekt ist, geöffnet wird und somit die Stromzufuhr zum Heizwendel 13 irreparabel unterbricht. In diesem Fall muß das Gerät zur Reparatur in eine Werkstatt gebracht werden.

Der erste Überlauf 31 wird von einem Kanal 11 begrenzt, an dessen einem vom Steigrohr 7 entfernteren Ende ein Auslaß 12 ausgebildet ist, an dem das vom Durchlauferhitzer 10 erhitzte Wasser 50 in eine darunter abgestellte Brüheinrichtung 40 abfließen kann und dort beispielsweise mit Kaffeemehl 51 oder Teeblätter kontaminiert wird, um so nach dem Extrahiervorgang ein Getränk entnehmen zu können, das dann beispielsweise in eine darunter befindliche Aufnahmevorrichtung 41, vorzugsweise eine Kanne oder eine Tasse oder sonst ein Gefäß abfließt. Während der Auslaß 12 am Boden des Kanals 11 ausgebildet ist, ist noch an der Oberseite des Kanals 11 ein weiterer Auslaß 44 vorgesehen, der dazu dient, daß der beim Kochvorgang im Durchlauferhitzer 10 erzeugte Dampf nach oben abströmen kann.

Die elektrische Steuereinheit 32 ist über eine elektrische Leitung 45 mit dem Antriebsmotor (nicht dargestellt) der Pumpe 4 verbunden. Eine weitere elektrische Leitung 46 ist zu dem Sensor 19 gelegt, so daß dieser seine elektrischen Impulse an die Steuereinheit 32 abgeben kann. Schließlich ist noch über eine elektrische Leitung 47 eine mit einzelnen elektrischen Schaltern 52 versehene Tassenvorwahlschalteinrichtung 37 mit der Steuereinheit 32 verbunden. In der Tassenvorwahlschalteinrichtung 37 sind ein Ein-/Ausschalter 38 und ein Dauerschalter 39 integriert, die ebenfalls über die Leitung 47 mit der Steuereinheit 32 in elektrischem Kontakt stehen.

Die Wirkungsweise des erfindungsgemäßen Gerätes zur Zubereitung heißer Getränke, insbesondere Getränke, die mit löslichem Pulver hergestellt werden, ist folgende: Zunächst wird der Wasserbehälter 1 mit Wasser 50 gefüllt. Die maximale Füllstandshöhe 53 im Wasserbehälter 1 kann auf jedem beliebigen Niveau unterhalb oder oberhalb des Wasserfüllstandes 17 des Zwischenbehälters 6 ausgebildet sein. Dies deshalb, weil die Pumpe 4 im ausgeschalteten Zustand als Sperrventil fungiert, so daß nur dann, wenn diese eingeschaltet wird, Wasser in den Zwischenbehälter 6 eingefüllt werden kann.

Wird nun das Gerät über den Ein-/Ausschalter 38 eingeschaltet, so fragt die als Mikroprozessor ausgebildete Steuereinheit 32 den Sensor 19 ab, ob sich der Wasserspiegel im Zwischenbehälter 6 auf dem Wasserfüllstand 17 befindet. Ist dies nicht der Fall, so wird zunächst die Pumpe 4 über die Leitung 45 eingeschaltet und diese fördert Wasser 50 über den Leitungsabschnitt 28 in den Behälterraum 9 des Zwischenbehälters 6. Dabei öffnet das Rückschlagventil 33. Das Wasser 50 steigt im Zwischenbehälter 6 so lange an, bis es die Höhe des Überlaufs 25 erreicht hat. Ist in dem Leitungsabschnitt 29 und in dem Steigrohr 7 des Durchlauferhitzers 10 ebenfalls zu wenig Wasser, so fließt das im Zwischenbehälter 6 überschüssige Wasser in den Leitungsabschnitt 29 und füllt diesen sowie das Steigrohr 7 so lange, bis auch dieser Wasserspiegel die Oberkante des Überlaufs 25 erreicht hat. Die Pumpe 4 bleibt noch so lange eingeschaltet bis der Wasserspiegel im Zwischenbehälter 6 den Wasserfüllstand 17 erreicht hat, der etwas über dem zweiten Überlauf 25 liegt. Ist diese erreicht, gibt der Sensor 19 ein elektrisches Signal an die Steuereinheit 32 ab, die nun die Pumpe 4 abschaltet. Gleichzeitig oder anschließend wird über die elektrischen Leitungen 24 und 42 der Heizwendel 23 des Heizwiderstandes 13 mit Strom versorgt.

Nun wird das im Steigrohr 7 befindliche Wasser 50 aufgeheizt, bis es seinen Siedepunkt erreicht. Bis zu diesem Punkt ist die Blasenbildung im Steigrohr 7 noch so gering, daß kein Wasser 50 über den ersten Überlauf 31 abfließen kann. Wurde noch kein Betätigungsknopf 52 der Tassenvorwahlschalteinrichtung 37 oder der Dauerschalter 39 eingeschaltet, so gibt die Thermostateinrichtung 36 ein elektrisches Signal an die Steuereinheit 32 und der Strom wird zum Heizwiderstand 13 unterbrochen. Das Gerät ist nun in seiner Stand-by-Stellung und die Wassertemperatur im Steigrohr 7 wird auf diesem Niveau in geringem Toleranzbereich konstant gehalten. Besteht die Thermostateinrichtung 36 beispielsweise aus einem PTC-Element, so wird in Abhängigkeit der Temperatur der Widerstand verändert, der der Steuereinheit 32 zugeführt wird und diese erkennt, welche Temperatur am Durchlauferhitzer 10 vorliegt. Liegt der Siedepunkt vor, so unterbricht die Steuereinheit 32 die Stromzufuhr zum Heizwendel 23, wie bereits zuvor beschrieben. Es ist aber auch denkbar, anstelle eines Thermosensors zwei Bimetallthermostate zu verwenden, von denen der eine den Stand-by-Betrieb und der andere den Kochbetrieb regelt. Diese Ein-/Ausschaltungen werden ebenfalls der Steuereinheit 32 zugeführt, die ihrerseits dann die Pumpe 4 steuert. Wurde bereits beim Einschalten des Ein-/Ausschalters 38 auch eine Tassenvorwahltaste 52 an der Tassenvorwahlschalteinrichtung 37 eingeschaltet, so wird nach Erreichen der Siedetemperatur im Durchlauferhitzer 10 dieser nicht durch die Steuereinrichtung von der Stromzufuhr getrennt, sondern das Wasser wird im Steigrohr 7 so lange weiter aufgeheizt, bis es zu kochen beginnt. Nun beginnt unter Bildung von Blasen der Kochvorgang im Steigrohr 7 und Wasser 50 wird über den Wasserfüllstand 17 nach oben geschleudert, bis Teile des kochenden Wassers den ersten Überlauf 31 erreichen und am Auslaß 12 abfließen können. Dabei sinkt der Wasserfüllstand 17 im Zwischenbehälter 6, was vom Sensor 19 erkannt wird, der dann seine elektrischen Signale über die elektrische Leitung 46 an die Steuereinheit 32 abgibt, die dann ihrerseits über die elektrische Leitung 45 die Pumpe 4 einschaltet. Wird wieder der Wasserfüllstand 17 erreicht, gibt wiederum der Sensor 19 ein elektrisches Signal über die Leitung 46 an die Steuereinheit 32, die dann ihrerseits wiederum über die elektrische Leitung 45 die Pumpe 4 abschaltet. Dieser Vorgang wiederholt sich so lange, bis die von der Steuereinheit 32 ermittelte Einschaltzeit der Pumpe 4 einen Wert erreicht hat, der der von der Pumpe 4 abgegebenen Wassermenge entspricht, die von einer Bedienungsperson an der Tassenvorwahlschalteinrichtung 37 eingestellt wurde. Der Durchlauferhitzer 10 pumpt dabei so lange Wasser über den ersten Überlauf 31, bis die Pumpe nach Erreichen der erforderlichen Einschaltzeit abgeschaltet wird.

Nun wird auch die Stromzufuhr zum Durchlauferhitzer 10 über die elektrische Leitung 24 von der Steuereinheit 32 unterbrochen und es setzt wieder Stand-by-Betrieb ein. In diesem Zustand wird immer die Wasserfüllstandshöhe 17 konstant gehalten. Sobald ein Schalter 52 betätigt wird, wird von der Steuereinheit 32 der Durchlauferhitzer 10 eingeschaltet. Das dabei von dem Durchlauferhitzer 10 über den ersten Überlauf 31 weggepumpte Wasser wird durch Einschalten der Pumpe 4 und Nachfüllen des Zufuhrbehälters 6 ausgeglichen. Die Summe der Einschaltzeiten der Pumpe 4 nach Betätigen eines Schalters 52 gibt als Maß für die Menge des geförderten heißen Wassers, d.h., eine Tasse heißes Wasser benötigt beispielsweise insgesamt 1 Minute Einschaltzeit der Pumpe 4. Ist diese Zeit erreicht, schaltet der Brühvorgang ab. In je engeren Grenzen also die minimale und maximale Höhe des Füllstandes im Zufuhrbehälter 6 gehalten wird, um so genauer ist die Dosiermenge an abgegebenem Wasser.

Betätigt eine Bedienungsperson, nachdem das Gerät seinen Stand-by-Betrieb erreicht hat, den Dauerschalter 39, so wird der Durchlauferhitzer 10 so lange mit Strom versorgt, wie der Dauerschalter 39 eingeschaltet bleibt. Die Pumpe 4 fördert immer dasjenige Wasservolumen im Zufuhrbehälter 6 nach, was der Durchlauferhitzer 10 über den ersten Überlauf 31 wegpumpt. Die Einschaltzeit der Pumpe 4 wird also im Dauerbetrieb von dem Sensor 19 und der Steuereinheit 32 bestimmt, d.h., bei zu tiefem bzw. zu hohem Wasserspiegel wird die Pumpe 4 immer ein- bzw. abschaltet.

In dem Falle, in dem der Wasserbehälter 1 einmal leergepumpt ist, fällt der Wasserspiegel 17 im Zufuhrbehälter 6 trotz weiter eingeschalteter Pumpe 4 nur bis auf die Höhe des zweiten Überlaufes 25, so daß ab diesem Zeitpunkt kein Wasser in den Leitungsabschnitt 29 und somit in den Durchlauferhitzer 10 nachfließen kann. Der Durchlauferhitzer 10 ist aber weiter eingeschaltet und pumpt zunächst das im Steigrohr 7 noch befindliche Wasser über den ersten Überlauf 31 heraus. Erreicht der Füllstand im Steigrohr 7 eine Höhe, die nicht mehr ausreicht, kochendes Wasser über den ersten Überlauf 31 wegzupumpen, so wird dieses Restwasser im Steigrohr 7 verdampft. Der Dampf kann über den Auslaß 44 oder auch über den Auslaß 12 in die Atmosphäre entweichen. Ist alles Wasser im Steigrohr 7 verdampft, so steigt die Temperatur am Durchlauferhitzer 10 über die beim Pumpvorgang vorhandene Betriebstemperatur nach oben hinaus, was auch von der Thermostateinrichtung 36 gemessen und als elektrischer Impuls über die elektrische Leitung 24 der Steuereinheit 32 zugeführt wird. Diese schaltet sofort über die Leitungen 24 und 42 den Heizwendel 23 des Durchlauferhitzers 10 ab und es ist keine weitere Abgabe von heißem Wasser mehr möglich. Eine Anzeigeeinrichtung (nicht dargestellt) kann einer Bedienungsperson anzeigen, daß der Wasserbehälter 1 leer ist und neu gefüllt werden muß. Es kann aber auch bei einem minimalen Füllstand im Wasserbehälter 1 ein zusätzlicher Sensor (nicht dargestellt) angeordnet sein, der der Steuereinheit 32 das zu tiefe Wasserniveau anzeigt und diese die Heizeinrichtung 10 abschaltet und über ein Signal einer Bedienungsperson den Wassermangel mitteilt.

Mit Hilfe der dosierten Abgabe von kochendem Wasser bei diesem Gerät, was durch die Tassenvorwahlschalteinrichtung 37 erfolgt, können insbesondere Brühgetränke besonders einfach hergestellt werden, wenn hierzu ein lösliches Pulver als Geschmacksträger gewählt wird. Es ist nämlich möglich, bei der Wahl von einer Tasse auch eine Zumeßeinrichtung von löslichem Pulver in dem Gerät zu integrieren (nicht dargestellt), das automatisch in einen Behälter entsprechend der Tassenzahl mehr oder weniger löslichen Pulver einfüllt und anschließend die entsprechende kochende Wassermenge selbsttätig einfließen läßt. Eine Bedienungsperson hat somit bei der Dosierung von Wasser und löslichem Pulver keine weiteren Schritte durchzuführen, außer daß sie den entsprechenden Tassenvorwahlknopf sowie ein Gefäß mit der entsprechenden Tassengröße unter den Auslaß 12 stellt.

## Patentansprüche

1. Gerät zur Zubereitung heißer Getränke, insbesondere Getränke, die mit löslichem Pulver hergestellt werden, mit einem Wasserbehälter (1), der über eine Leitungsanordnung (27, 28, 29) mit einem Steigrohr (7) eines nach dem Prinzip einer Thermalpumpe arbeitenden Durchlauferhitzers (10) verbunden ist, dessen Ausgang von einem ersten Überlauf (31) gebildet ist, über den der Durchlauferhitzer (10) kochendes Wasser in eine Brüh- und/oder Aufnahmeeinrichtung (40, 41) fördert,
**dadurch gekennzeichnet,**
**daß** zwischen dem Wasserbehälter (1) und dem Durchlauferhitzer (10) in der Leitung (27, 28, 29)) ein Zwischenbehälter (6) ausgebildet ist, daß der Zwischenbehälter (6) einen zweiten Überlauf (25) aufweist, über den das Wasser zum Durchlauferhitzer (10) abfließt, daß über der Höhe des zweiten Überlaufs (25) der erste Überlauf (31) verläuft, daß in der Leitung (27, 28) zwischen dem Wassertank (1) und dem Zwischenbehälter (6) eine elektrisch angetriebene Pumpe (4) ausgebildet ist und daß Mittel (19, 32) vorgesehen sind, die mittels der Steuerung der Pumpe (4) das Wasser über der Höhe des zweiten Überlaufs (25) des Zwischenbehälters (6) im wesentlichen konstant halten.

2. Gerät nach Anspruch 1,
**dadurch gekennzeichnet,**
**daß** die Mittel aus einem den Füllstand (17) im Zwischenbehälter (6) überwachenden Sensor (19) mit einer elektronischen Steuereinheit (32) besteht, die sowohl mit dem Sensor (19) wie mit der Pumpe (4) elektrisch verbunden ist und daß die Steuereinheit (32) die Pumpe (4) so steuert, daß im Betrieb des Gerätes der Wasserspiegel (17) geringfügig über der Höhe des zweiten Überlaufs (25) gehalten wird, so daß Wasser zum Durchlauferhitzer (10) nachfließen kann, wenn dieser im Pumpenbetrieb über den ersten Überlauf (31) kochendes Wasser abgibt.

3. Gerät nach Anspruch 2,
**dadurch gekennzeichnet,**
**daß** am Einlaß des Zwischenbehälter (6) ein in Richtung zum Wassertank (1) schließendes Rückschlagventil (33) ausgebildet ist.

4. Gerät nach Anspruch 2,
**dadurch gekennzeichnet,**
**daß** die Pumpe (4) eine Dosierpumpe ist, deren abgegebene Flüssigkeitsmenge nach der Dauer ihrer Einschaltzeit bemessen wird und daß die Dauer der Einschaltzeit von der elektrischen Steuereinheit (32) gesteuert und erst ab dem Zeitpunkt zu zählen beginnt, wenn zuvor das richtige Wasserspiegelniveau (17) im Zwischenbehälter (6) durch den Sensor (19) mittels eines Signals an die Steuereinheit (32) abgegeben wurde.

5. Gerät nach Anspruch 4,
**dadurch gekennzeichnet,**
**daß** die Steuereinrichtung (32) mit einem die Temperatur des Durchlauferhitzers (10) kontrollierenden Temperatursensor (36) verbunden ist, daß die Steuereinrichtung (32) in Abhängigkeit der vom Temperatursensor (36) ermittelten Wassertemperatur den Heizwiderstand (13) des Durchlauferhitzers (10) im Warmhaltebetrieb abschaltet, wenn das Wasser im Steigrohr (7) siedet und wieder einschaltet, wenn die Temperatur des Wassers einen vorgegebenen Wert unterschreitet und daß nach Einschalten des Brühbetriebs die Steuereinrichtung (32) den Heizwiderstand (13) so lange zuschaltet, bis die gewünschte Heißwassermenge abgegeben ist, wobei der Temperatursensor das Signal für den zulässigen Temperaturbereich bei kochendem Wasser abgeben muß.

6. Gerät nach Anspruch 4,
**dadurch gekennzeichnet,**
**daß** zur Abgabe einer gewünschten Tassenzahl von einem Brühgetränk eine Tassenvorwahlschalteinrichtung (37) am Gerät vorgesehen ist, die in elektrischer Verbindung mit der Steuereinheit (32) steht und daß nach Auswahl der Tassenzahl die Steuereinheit (32) die Einschaltzeit der Pumpe (4) entsprechend der Anzahl der Tassen festlegt und somit die Pumpe (4) entsprechend lang mit Strom versorgt.

7. Verfahren zum Herstellen heißer Getränke mit dem Gerät nach Anspruch 2,
**dadurch gekennzeichnet,**
**daß** nach Einschalten des Gerätes mittels des Ein-/Ausschalters (38) die Steuereinheit (32) über den Sensor (19) das Flüssigkeitsniveau (17) ermittelt und bei Bedarf die Pumpe (4) so lange einschaltet, bis das für die Abgabe von Wasser erforderliche Flüssigkeitsniveau (17) im Zwischenbehälter (6) erreicht ist, daß anschließend die Steuereinrichtung (32) die Heizeinrichtung (10) so lange einschaltet, bis der Thermostat (36) die Kochtemperatur erreicht hat, daß nach Betätigung einer Tassenvorwahltaste (37) oder der Dauerbetriebstaste (39) der Durchlauferhitzer (10) von der Steuereinrichtung (32) so lange eingeschaltet bleibt, bis die für die entsprechende Anzahl von Tassen erforderliche Einschaltzeit der Pumpe (4) erreicht ist.

## Claims

1. Appliance for preparing hot beverages, in particular beverages which are produced using soluble powder, comprising a water vessel (1) which is connected to a riser pipe (7) of a through-flow heater (10), which operates in accordance with the principle of a thermal pump, via a line arrangement (27, 28, 29), the output of the said throughflow heater being formed by a first overflow (31) via which the throughflow heater (10) transports boiling water to a brewing and/or holding device (40, 41), **characterized in that** an intermediate vessel (6) is formed between the water vessel (1) and the throughflow heater (10) in the line (27, 28, 29), **in that** the intermediate vessel (6) has a second overflow (25) via which the water flows away to the throughflow heater (10), **in that** the first overflow (31) runs above the level of the second overflow (25), **in that** an electrically driven pump (4) is formed in the line (27, 28) between the water tank (1) and the intermediate vessel (6), and **in that** means (19, 32) are provided which keep the water substantially constant above the level of the second overflow (25) of the intermediate vessel (6) by means of controlling the pump (4).

2. Appliance according to Claim 1, **characterized in that** the means comprise a sensor (19) which monitors the filling level (17) in the intermediate vessel (6) together with an electronic control unit (32) which is electrically connected both to the sensor (19) and to the pump (4), and **in that** the control unit (32) controls the pump (4) such that the water level (17) is kept slightly above the level of the second overflow (25) during operation of the appliance, with the result that water can flow down to the throughflow heater (10) when the said throughflow heater dispenses boiling water via the first overflow (31) in pump mode.

3. Appliance according to Claim 2, **characterized in that** a non-return valve (33) which closes in the direction of the water tank (1) is formed at the inlet of the intermediate vessel (6).

4. Appliance according to Claim 2, **characterized in that** the pump (4) is a metering pump whose dispensed quantity of liquid is determined in accordance with the duration of its switch-on time, and **in that** the duration of the switch-on time is controlled by the electrical control unit (32) and begins to count only starting from the time when the correct water level (17) has first been dispensed in the intermediate vessel (6) by the sensor (19) by means of a signal to the control unit (32).

5. Appliance according to Claim 4, **characterized in that** the control unit (32) is connected to a temperature sensor (36) which checks the temperature of the throughflow heater (10), **in that** the control unit (32) disconnects the heating resistor (13) of the throughflow heater (10) as a function of the water temperature detected by the temperature sensor (36) during the keep-warm mode when the water in the riser pipe (7) boils and switches it on again when the temperature of the water falls below a prespecified value, and **in that**, after the brewing mode is switched on, the control unit (32) connects the heating resistor (13) until the desired quantity of hot water is dispensed, with the temperature sensor having to emit the signal for the permissible temperature range when the water is boiling.

6. Appliance according to Claim 4, **characterized in that** a cup-preselection device (37) is provided on the appliance for the purpose of dispensing a desired number of cups of a brewed beverage, which cup-preselection device is electrically connected to the control unit (32), and **in that**, after the number of cups is selected, the control unit (32) establishes the switch-on time of the pump (4) in accordance with the number of cups and thus supplies the pump (4) with power for a corresponding length of time.

7. Method for producing hot beverages using the appliance according to Claim 2, **characterized in that**, after the appliance is switched on by means of the on/off switch (38), the control unit (32) detects the liquid level (17) by means of the sensor (19) and, if required, switches on the pump (4) until the liquid level (17) required for dispensing water is reached in the intermediate vessel (6), **in that** the control unit (32) then switches on the heating device (10) until the thermostat (36) has reached the boiling temperature, **in that**, after operation of a cup-preselection key (37) or the permanent-operation key (39), the throughflow heater (10) is kept switched on by the control unit (32) until the switch-on time of the pump (4) required for the corresponding number of cups is reached.

## Revendications

1. Appareil pour la préparation de boissons chaudes, en particulier de boissons qui sont préparées avec une poudre soluble, comportant un réservoir d'eau (1), qui est raccordé par un système de conduites (27, 28, 29) à un tube montant (7) d'un chauffe-eau continu (10) opérant selon le principe d'une pompe thermique, et dont la sortie est formée par un premier trop-plein (31) par lequel le chauffe-eau continu (10) envoie de l'eau bouillante dans un dispositif de percolation et/ou de réception (40, 41), **caractérisé en ce qu'**un réservoir intermédiaire (6) est formé dans la conduite (27, 28, 29) entre le réservoir d'eau (1) et le chauffe-eau continu (10), **en ce que** le réservoir intermédiaire (6) présente un deuxième trop-plein (25), par lequel l'eau s'écoule vers le chauffe-eau continu (10), **en ce que** le premier trop-plein (31) est situé au-dessus de la hauteur du deuxième trop-plein (25), **en ce qu'**une pompe à commande électrique est formée dans la conduite (27, 28) entre le réservoir d'eau (1) et le réservoir intermédiaire (6), et **en ce qu'**il est prévu des moyens (19, 32) qui, au moyen de la commande de la pompe (4), maintiennent l'eau à un niveau sensiblement constant au-dessus de la hauteur du deuxième trop-plein (25) du réservoir intermédiaire (6).

2. Appareil selon la revendication 1, **caractérisé en ce que** les moyens se composent d'un détecteur (19) qui surveille le niveau de remplissage (17) dans le réservoir intermédiaire (6) avec une unité de commande électronique (32), qui est électriquement reliée aussi bien au détecteur (19) qu'à la pompe (4), et **en ce que** l'unité de commande (32) commande la pompe (4) de telle manière que, pendant le fonctionnement de l'appareil, le niveau d'eau (17) soit maintenu légèrement au-dessus de la hauteur du deuxième trop-plein (25), de sorte que de l'eau puisse s'écouler vers le chauffe-eau continu (10), lorsque ce dernier cède de l'eau bouillante par le premier trop-plein (31) pendant le fonctionnement de la pompe.

3. Appareil selon la revendication 2, **caractérisé en ce qu'**un clapet anti-retour (33) se fermant en direction du réservoir d'eau (1) est formé à l'entrée du réservoir intermédiaire (6).

4. Appareil selon la revendication 2, **caractérisé en ce que** la pompe (4) est une pompe de dosage, dont la quantité de liquide cédée est proportionnée à la durée de son temps d'activation et **en ce que** la durée du temps d'activation est commandée par l'unité de commande électrique (32) et ne commence à compter qu'à partir du moment où le niveau d'eau correct (17) dans le réservoir intermédiaire (6) a préalablement été communiqué par le détecteur (19) à l'unité de commande (32) au moyen d'un signal.

5. Appareil selon la revendication 4, **caractérisé en ce que** le dispositif de commande (32) est relié à un capteur de température (36) contrôlant la température du chauffe-eau continu (10), **en ce que** le dispositif de commande (32) coupe la résistance de chauffage (13) du chauffe-eau continu (10) en fonction de la température de l'eau déterminée par le capteur de température (36) pendant le fonctionnement de maintien à température, lorsque l'eau bout dans le tube montant (7) et la connecte à nouveau lorsque la température de l'eau descend en dessous d'une valeur prédéterminée, et **en ce que**, après l'activation du fonctionnement de percolation, le dispositif de commande (32) connecte la résistance de chauffage (13) jusqu'à ce que la quantité d'eau chaude désirée ait été fournie, dans lequel le capteur de température doit produire le signal correspondant à la plage de température admissible lorsque l'eau bout.

6. Appareil selon la revendication 4, **caractérisé en ce que**, pour fournir un nombre de tasses désiré d'une boisson percolée, il est prévu sur l'appareil un dispositif de présélection de tasses (37), qui est en liaison électrique avec l'unité de commande (32) et **en ce que**, après la sélection du nombre de tasses, l'unité de commande (32) fixe le temps d'activation de la pompe (4) en correspondance avec le nombre de tasses et alimente ainsi la pompe (4) en courant pendant une durée correspondante.

7. Procédé pour la préparation de boissons chaudes avec l'appareil selon la revendication 2, **caractérisé en ce que**, après le branchement de l'appareil au moyen d'un interrupteur marche/arrêt (38), l'unité de commande (32) détermine le niveau de liquide (17) au moyen du détecteur (19) et, si nécessaire, active la pompe (4) jusqu'à ce que le niveau de liquide (17) nécessaire pour la fourniture d'eau soit atteint dans le réservoir intermédiaire (6), **en ce que** l'unité de commande (32) active ensuite le dispositif de chauffage (10) jusqu'à ce que le thermostat (36) ait atteint la température d'ébullition, **en ce que**, après l'actionnement d'une touche de présélection de tasses (37) ou de la touche de durée de fonctionnement (39), le chauffe-eau continu (10) reste activé par le dispositif de commande (32) jusqu'à ce que le temps d'activation de la pompe (4), nécessaire pour le nombre correspondant de tasses, soit atteint.
